## Europäisches Patentamt
## European Patent Office
## Office européen des brevets

(19)

(11) Numéro de publication: **0 028 177**
**B1**

(12) **FASCICULE DE BREVET EUROPEEN**

(45) Date de publication du fascicule du brevet: **18.07.84**

(51) Int. Cl.³: **G 11 B 5/12**

(21) Numéro de dépôt: **80401422.3**

(22) Date de dépôt: **06.10.80**

(54) Transducteur magnétique intégré.

(30) Priorité: **25.10.79 FR 7926532**

(43) Date de publication de la demande:
**06.05.81 Bulletin 81/18**

(45) Mention de la délivrance du brevet:
**18.07.84 Bulletin 84/29**

(84) Etats contractants désignés:
**DE GB IT NL**

(56) Documents cités:
DE - C - 877 208
FR - A - 1 070 484
FR - A - 1 366 446
FR - A - 2 209 154
US - A - 4 044 394

PATENTS ABSTRACTS OF JAPAN, vol. 2, no.
133, 8. November 1978, page 8012 E 78, Tokyo,
JP
PATENTS ABSTRACTS OF JAPAN, vol. 2, no.
55, 21 avril 1978, page 1267 E 78, Tokyo, JP
PATENTS ABSTRACTS OF JAPAN, vol. 1, no.
51, 12 avril 1978, page 982 E 78, Tokyo, JP

(73) Titulaire: **COMPAGNIE INTERNATIONALE POUR
L'INFORMATIQUE CII - HONEYWELL BULL (dite
CII-HB)**
**94, avenue Gambetta**
**F-75020 Paris (FR)**

(72) Inventeur: **Desserre, Jacques M.**
**94, avenue Gambetta**
**F-75020 - Paris (FR)**
Inventeur: **Lazzari, Jean-Pierre M.**
**94, avenue Gambetta**
**F-75020 - Paris (FR)**

(74) Mandataire: **Gouesmel, Daniel**
**94, avenue Gambetta**
**F-75020 Paris (FR)**

Courier Press, Leamington Spa, England.

## Description

La présente invention concerne un transducteur magnétique intégré du type décrit dans le préambule de la revendication n° 1. Elle est notamment applicable à la lecture et/ou l'écriture des informations contenues sur les supports magnétiques d'enregistrement tels que les disques magnétiques, rigides ou souples et les bandes.

On sait que, pour enregistrer (on dit encore écrire) des informations sur un support magnétique d'enregistrement, on crée sur (ou dans) ce support, en une pluralité d'endroits parfaitement déterminés de celui-ci, au moins une modification de l'une de ses propiétés magnétiques, ce qui se traduit par au moins une variation de la grandeur physique qui caractérise ladite propriété. La lecture de ces informations s'effectue en détectant lesdites modifications et en transformant la variation de la grandeur physique définie plus haut en une variation d'une autre grandeur physique qui le plus souvent est la variation de la tension ou du courant d'un signal électrique.

La propriété magnétique utilisée pour enregistrer des informations sur un support magnétique est définie par exemple, soit par l'absence ou la présence d'une induction magnétique soit par le signe de celle-ci, soit encore par sa direction.

On sait que les disques magnétiques portent les informations sur des pistes d'enregistrement concentriques circulaires qui ont une largeur radiale n'excédant pas quelques centièmes de millimètre et couvrent généralement la majeure partie de leurs deux faces.

Les bandes magnétiques portent les informations sur des pistes parallèles à la longueur de la bande.

Les moyens les plus fréquemment utilisés, qui permettent soit d'enregistrer les informations sur des supports tels que les disques ou les bandes, soit de les lire, soit enfin de réaliser l'une ou l'autre de ces deux fonctions, sont appelés "transducteurs magnétiques". Généralement on associe à un support d'enregistrement un ou plusieurs transducteurs, le support défilant devant celui-ci ou ceux-ci. Pour simplifier on supposera, dans la suite de la description, qu'un seul transducteur est associé à un même support.

Un transducteur magnétique comprend un circuit magnétique autour duquel est disposé un enroulement et qui comporte un entrefer. Ce dernier est disposé à une distance très faible de la surface du support de l'ordre de quelques dixièmes de micron.

L'enroulement comprend des fils électriques d'entrée et/ou sortie.

Pour enregistrer les informations sur le support associé au transducteur, on alimente l'enroulement par un courant électrique dont on peut faire varier le sens ou la durée de passage dans celui-ci. Le support est ainsi soumis au champ magnétique d'intensité et de sens variable crée par le transducteur au voisinage immédiat de son entrefer (à quelques dixièmes de micron de celui-ci), ce qui crée sur chaque piste du support une succession de petits domaines magnétiques, dont la dimension est de l'ordre de celle de l'entrefer, et qui ont des inductions magnétiques de sens opposé. Ces domaines, également appelés "domaines magnétiques élémentaires", sont répartis sur toute la longueur de la piste.

Inversement, lorsque les informations d'un support donné défilent devant l'entrefer du transducteur qui lui est associé, celui-ci délivre des signaux électriques par l'intermédiaire de ses fils électriques d'entrée et/ou sortie, signaux envoyés à des circuits électroniques de lecture associés aux transducteurs.

La tendance actuelle du développement des transducteurs magnétiques est de produire, selon les techniques de fabrication des circuits intégrés, des transducteurs de dimension de plus en plus faibles, (par exemple, avec des entrefers dont les dimensions sont de l'ordre du micron), de tels transducteurs étant par exemple, fabriqués par la Compagnie Internationale pour L'Informatique CII-Honeywell Bull et décrits dans les brevets français FR—A—2.063.693 déposé le 28 Octobre 1969 par la Compagnie Internationale pour l'Informatique et le Commisariat à l'énergie atomique sous le titre: Tête magnétique intégrée et procédé de fabrication de la dite tête" et FR—A—2.209,154 déposé le 03 juillet 1972 par la Compagnie Internationale pour l'Informatique sous le titre: "Transducteurs magnétiques perfectionnés et leur procédé de fabrication".

Un tel transducteur connu comprend d'une part:

a)—un circuit magnétique formé de deux couches minces réunies à une extrémité de manière à ce qu'elles soient couplées magnétiquement, et disposées à l'autre extrémité voisine du support d'enregistrement associé au transducteur, de façon à former un entrefer (l'entrefer est situé habituellement à quelques dixièmes de microns du support). L'entrefer de forme sensiblement rectangulaire à une longueur très supérieure à la largeur, voisine de la largeur des pistes du support. Le support est sensiblement perpendiculaire auxdites couches qui constituent les pièces polaires du transducteur. L'une des deux couches minces magnétiques est disposée sur un substrat en matière isolante.

b)—d'autre part, un bobinage électrique formé, entre lesdites couches minces magnétiques, de couches minces conductrices qui sont superposées dans une direction perpendiculaire au plan desdites couches minces magnétiques, de telle sorte que ces dernières forment une enveloppe contenant les couches conductrices séparées les unes des autres par des couches minces électriquement isolantes (on rappelle que l'on désigne habituellement sous le nom de couches minces des couches dont l'épaisseur est de l'ordre de quelques angströms à quelques microns).

Le support d'enregistrement magnétique associé au

Le support d'enregistrement magnétique associé au transducteur défile devant celui-ci perpendiculairement au plan des deux couches magnétiques, c'est-à-dire perpendiculairement à la longueur de l'entrefer. Lors de ce défilement, tout domaine magnétique d'une piste du support en regard de laquelle le transducteur est disposé, passe successivement dans le temps, au droit de la première couche magnétique appelée "pièce polaire amont" et de la seconde appelée "pièce polaire aval". On dit également que ledit domaine rencontre successivement les pièces polaires amont et aval et par extension, que le support rencontre successivement lesdites pièces amont et aval.

De ce fait il est clair, que des deux pièces polaires, c'est la pièce polaire aval qui définit la nature des informations enregistrées sur le support, c'est-à-dire notamment le sens et le module de l'induction magnétique dans chacun des domaines crées sur ce support. En effet, lorsque ce dernier défile devant le transducteur, chacun de ceux-ci est soumis successivement, dans le temps au champ magnétique créé par la pièce polaire amont au voisinage immédiat de sa surface, du côté de l'entrefer du transducteur et au champ créé par la pièce polaire aval, qui agit donc en dernier sur ledit domaine.

En d'autres termes, on peut dire, que, lors de l'enregistrement des informations, seule la pièce polaire aval laisse son "empreinte de champ" sur le support.

De préférence la pièce polaire aval d'un transducteur intégré est celle qui est déposée sur le substrat.

Dans la pratique courante, le bobinage d'un transducteur intégré comprend deux enroulements, identiques (c'est-à-dire ayant le même nombre de tours) qui ont un point électrique commun. Le premier enroulement DC est celui dont les couches conductrices minces sont les plus proches de la pièce polaire aval, alors que le second enroulement DA est celui dont les couches conductrices minces sont les plus éloignées, le point D étant le point électrique commun aux deux enroulements. Il en résulte que le coefficient de couplage, magnétique mutuel du premier enroulement DC avec la pièce polaire aval (également appelé coefficient d'inductance mutuelle) est supérieur au coefficient de couplage magnétique mutuel du second enroulement DA avec cell-ci.

Cela entraîne les conséquences suivantes:

—on sait que pour enregistrer deux domaines élémentaires successifs sur une piste du support d'enregistrement on alimente successivement le premier enroulement DC par une impulsion de tension et/ou courant, par exemple positive, le second enroulement DA n'étant alors pas alimenté) et le second enroulement par une impulsion de tension et/ou courant par exemple négative (le premier enroulement DC n'étant alors pas alimenté), les amplitudes des impulsions négative et positive étant égales en valeur absolue. Les coefficients de couplage magnétique mutuels des enroulements DC, DA avec la pièce polaire aval étant différents, il en résulte, notamment, que les modules des inductions magnétiques créés par le transducteur à l'intérieur des deux domaines élémentaires successifs enregistrés sont différents: Le module de l'induction magnétique dans le domaine élémentaire enregistré par le passage du courant électrique dans l'enroulement DC est supérieur au module de l'induction magnétique dans le domaine élémentaire enregistré lors du passage du courant électrique dans l'enroulement DA, puisque le couplage magnétique de l'enroulement BC avec la pièce polaire aval est supérieur à celui de l'enroulement DC avec cette même pièce.

En d'autres termes, la courbe représentative d'induction magnétique mesurée le long d'une piste du support est asymétrique par rapport à l'axe d'ordonnée B=O où B est l'induction magnétique.

Elle se présente comme une succession d'impulsions, d'induction magnétique, alternativement négatives et positives, le module des impulsions négatives étant différent du module des impulsions positives.

Par abus de langage, on dit encore que l'induction magnétique dans le support d'enregistrement est asymétrique.

Lorsque deux domaines magnétiques élementaires successifs d'une piste du support défilent devant le transducteur, celui-ci délivre une impulsion électrique telle qui l'intervalle de temps séparant l'instant $t_1$ où sa tension est nulle de l'instant $t_2$ où sa tension est maximale est sensiblement différent de l'intervalle de temps séparant ce même instant $t_2$ de l'instant $t_3$ où sa tension retombe à zéro. Il est clair qu'il en est de même pour chaque impulsion électrique délivrée par le transducteur lorsque touts les domaines élémentaires d'une piste défilent devant lui. On dit alors que le signal de lecture des informations d'une piste est asymétrique en fonction du temps.

Cette asymétrie du signal présente des inconvénients lors de l'exploitation de celui-ci par les circuits électroniques associés au transducteur, et peut entraîner des erreurs dans la détermination de la valeur des informations que représente chacune de ces impulsions. Ce risque d'erreur est d'autant plus important que la densité des informations le long de chaque piste du support est plus grande, (dans la pratique courante actuelle, on utilise de plus en plus fréquemment des supports d'enregistrement à forte densité d'informations), c'est-à-dire lorsque le nombre de domaines magnétiques élémentaires par unité de longueur mesurée selon la circonférence de la piste est plus grand.

Dans la pratique courante, on connait des solutions permettant de remédier à ces inconvénients. Celles-ci cherchent à résoudre le problème suivant à savoir égaliser les flux magnétiques créés par chacun des deux enroulements constituant le bobinage à travers la pièce polaire aval.

Une telle solution est par exemple décrite dans la demande brevet japonaise JPA—5.398.811, publiée le 29 Août 1968, et dont le résumé a été publié dans le Patent Abstracts of Japan, volume 2 N° 133 du 8 Novembre 1978, page 8012 E 78. Cette demande de brevet japonaise décrit un transducteur magnétique intégré comportant une première pièce polaire qu'on considère comme la pièce polaire aval et une seconde pièce polaire, réalisées en couches minces et entre lesquelles est disposé un bobinage formé de deux demi- bobinages constitué chacun d'un seul conducteur en couches minces. Pour simplifier, ces deux conducteurs seront appelés respectivement premier conducteur et second conducteur.

Si l'on appelle a la distance d'un point donné du premier conducteur par rapport à la première pièce polaire aval, et b la distance d'un point donné du second conducteur par rapport à cette même pièce polaire aval, la solution adoptée dans le transducteur magnétique décrit dans la demande japonaise consiste en ce que la somme des distances $\Sigma a$ de tous les points de premier conducteur par rapport à la pièce polaire aval est égale à la somme des distances de tous les points $\Sigma b$ du second transducteur par rapport à cette même pièce polaire aval.

Il en résulte que les deux conducteurs étant parcourus par le même courant I, le flux magnétique créé par le passage de ce courant dans le second conducteur à travers la pièce polaire aval est égal au flux magnétique créé par le passage du même courant I dans le premier conducteur à travers cette même pièce polaire aval.

En conclusion, on voit que dans ce transducteur magnétique intégré, qui comporte seulement deux tours de bobinage, chaque tour constituant un demi-bobinage, les flux magnétiques créés par chacun des deux conducteurs à travers la pièce polaire aval sont égaux, cela étant obtenu en agissant sur la forme géométrique de chaque tour (de chaque conducteur) et la localisation de chacun des points de celui-ci par rapport à la pièce polaire aval.

La solution adoptée dans le transducteur magnétique intégré décrite dans la demande de brevet japonaise précitée présente l'inconvénient de ne pas convenir pour des transducters magnétiques intégrés dont les deux enroulements comportent une pluralité de tours. Ainsi, il est extrémement fréquent que les transducteurs magnétiques intégrés utilisés dans la pratique courante comportent des bobinages ayant de l'ordre de 10 à 20 tours. On voit en effet que, dans ce cas, l'adoption de la solution de la demande de brevet japonaise précitée est pratiquement impossible puisqu'il serait extrémement difficile et compliqué technologiquement d'égaliser la somme des distances de tous les points de chaque conducteur de chaque enroulement par rapport à la pièce polaire aval.

De plus, on constate dans la pratique courante, que pour des raisons technologiques de fabrication, il arrive fréquemment que deux couches conductrices successives du second enroulement DA d'un transducteur magnétique intégré dont le bobinage comporte plusieurs tours, soient en court circuit. On montre que la probabilité d'avoir des court-circuits entre couches conductrices voisines ou de mauvaises isolations varient proportionnellement au carré du nombre de tours; par conséquent plus il y a de tours, plus la probabilité d'avoir des courts-circuits est grande. Enfin, on observe que la probabilité d'existence des court-circuits ou de mauvaises isolations est beaucoup plus grande pour le second enroulement DA que pour le premier enroulement DC. Cela provient du fait que pour des raisons technologiques de fabrication, il est plus difficile d'empiler des couches minces conductrices les unes sur les autres pour le second enroulement que pour le premier puisque chacune des couches conductrices et chacune des couches isolantes de ce second enroulement est déposée, dans le temps, après les couches conductrices et les couches isolantes du premier bobinage.

Il est bien évident qu'une fois la structure de transducteur intégré réalisée, on ne peut plus la modifier dans le cas où des court-circuits apparaissent entre des couches conductrices minces successives.

La présente invention permet de remédier aux inconvénients de la solution adoptée pour le transducteur magnétique intégré décrit dans la demande de brevet japonaise, en rendant la grande majorité des transducteurs magnétiques intégrés comportant une pluralité de tours utilisables même s'ils possèdent des couches conductrices minces successives en court-circuit, tout en permettant d'égaliser les flux magnétiques du premier et du second enroulement à travers la pièce polaire aval.

Cela est obtenu en donnant un nombre de tours différent à chacun des deux enroulements, parcourus respectivement par des courants $I_1$ et $I_2$, la somme des flux magnétiques créés par le passage du courant $I_1$ dans chaque couche conductrice du premier enroulement à travers la pièce polaire àmont étant égale à celles des flux magnétiques créés par le passage du courant $I_2$ dans chaque couche conductrice du second enroulement à travers la pièce polaire aval. Alors, dans ce cas, on peut donner au bobinage du transducteur plusieurs points milieu intermédiaires. On montre ainsi que, statistiquement, ceux-ci sont placés de telle manière qu'on peut choisir parmi eux un point milieu tel que l'on obtienne deux enroulements $E'_1$ et $E'_2$ du bobinage dont les flux magnétiques à travers la pièce polaire aval soient égaux. De la sorte, les caractéristiques de fonctionnement du transducteur magnétique intégré selon l'invention ainsi obtenues sont rendues stables dans le temps, de façon définitive, et sans réglage électronique compliqué et coûteux.

L'invention se rapporte à un transducteur de lecture et/ou d'écriture d'informations contenues sur un support magnétique défilant devant celui-ci comprenant:

—un circuit magnétique formé de deux couches minces magnétiques constituant les pièces polaires ($PP_1$, $PP_2$) superposées et couplées magnétiquement à une extrémité et disposées à l'autre extrémité voisine du support sensiblement perpendiculairement à celui-ci pour former un entrefer,

—un bobinage formé entre les couches minces magnétiques, de couches minces conductrices ($CO_i$, $CO_j$) qui sont superposées dans une direction perpendiculaire au plan des dites couches magnétiques et séparées les unes des autres par des couches minces électriquement isolantes, au moins deux couches minces conductrices pouvant être en court-circuit ou la couche mince isolante les séparant pouvant présenter des défauts d'isolation, qui est caractérisé en ce que le bobinage comporte au moins deux enroulements ($E_1$,$E_2$) ($E'_1$,$E'_2$) ayant un point électrique commun (D,F) et un nombre respectif de tours ($N_1$,$N_2$), ($N_1$,$N_2+N_3+N_4$), parcourus respectivement par les courants $l_1$ et $l_2$, les coefficients de couplage magnétique mutuel de chacune des couches conductrices ($CO_i$, $CO_j$) de chacun des deux enroulements avec la pièce polaire aval ($PP_1$) étant respectivement désignée par $M_{i1}$, $M_{j2}$, $N_1$ étant différent de $N_2$,$N_2+N_3+N_4$, les flux magnétiques

$$\sum_{i=1}^{N_1} M_{i1}\, l_1 \text{ et } \sum_{j=1}^{N_2} M_{j2}\, l_2$$

créés par chacun des deux enroulements à travers la pièce polaire aval ($PP_1$) étant égaux.

Des réalisations de l'invention sont décrites dans la description suivante en se référant aux figures annexées.

Sur ces dessins:

—la figure 1, rapelle comment est constitué un transducteur magnétique intégré de lecture et/ou écriture d'informations contenues sur un support, selon l'art antérieur;
—la figure 1a, étant un schéma de principe;
—les figures 1b et 1c, étant des vues de trois-quart en perspective;
—la figure 1d, étant une vue en coupe selon un plan perpendiculaire au support et parallèle au sens de défilement de celui-ci;
—la figure 2, est un schéma montrant de façon simplifiée la répartition de l'induction magnétique le long d'une portion de piste d'un support où les informations sont enregistrées par le transducteur magnétique selon l'art antérieur;
—la figure 3, montre la forme du signal de lecture d'un transducteur intégré selon l'art antérieur, signal de lecture des informations enregistrées par celui-ci sur une portion de piste d'un support d'enregistrement tel qu'un disque magnétique;
—la figure 4, représente un premier mode de réalisation d'un transducteur magnétique intégré selon l'invention, dont le bobinage comporte deux enroulements,
—la figure 4a, étant un schéma de principe;
—la figure 4b, étant une vue de trois-quart en prespective;
—la figure 5, est un schéma de principe montrant un second mode de réalisation d'un transducteur magnétique intégré selon l'invention;
—la figure 6, montre la répartition du champ d'induction magnétique dans plusieurs domaines magnétiques élémentaires voisins d'une piste d'un disque magnétique représentant les informations enregistrées par un transducteur magnétique intégré selon l'invention.

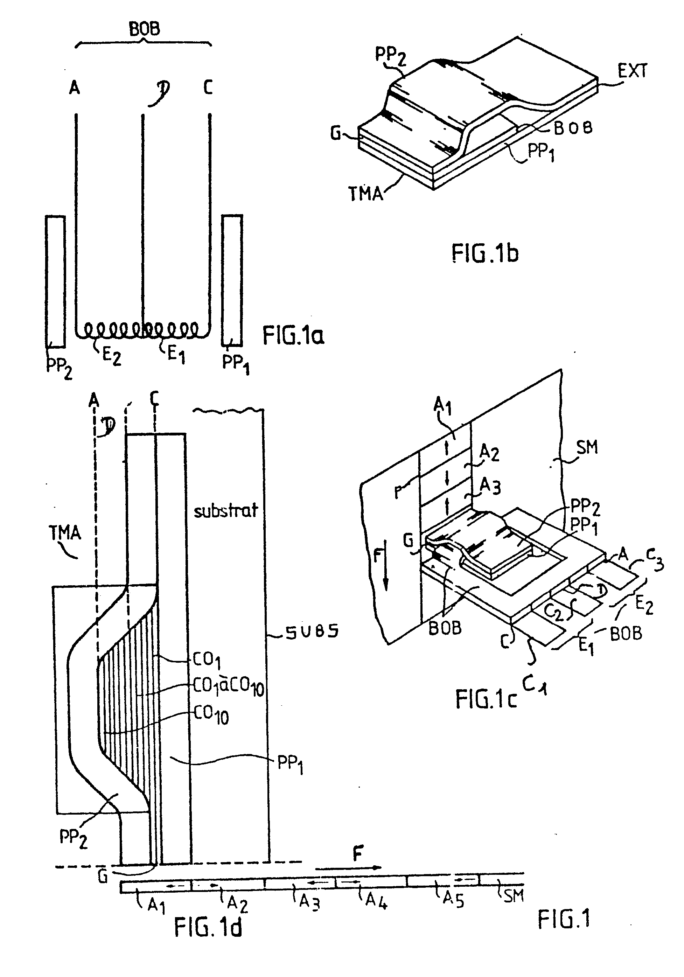

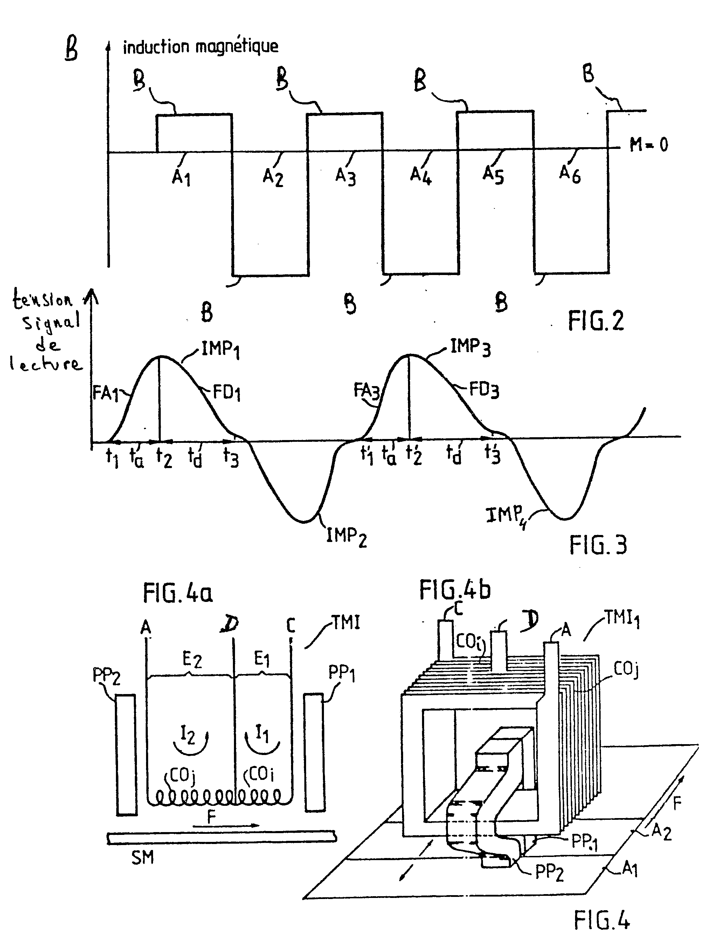

Afin de mieux comprendre comment est constitué le transducteur magnétique intégré selon l'invention, il est utile de faire quelques rappels, d'une part sur les transducteurs magnétiques intégrés selon l'art antérieur, illustrés par les figures 1a, 1b, 1c, 1d et d'autre part sur les inconvénients que ceux-ci présentent aussi bien qu'à l'écriture qu'à la lecture des informations, illustrès par les figures 2 et 3.

De tels transducteurs magnétiques intégrés, ont déjà été décrits dans les deux brevets français précités FR—A—2.063.693 et 2.209.154.

Ainsi qu'on peut le voir aux figures 1a à 1d, un transducteur magnétique intégré selon l'art antérieur TMA comprend un circuit magnétique formé de deux pièces polaires magnétiques en couches minces $PP_1$ et $PP_2$ entièrement superposées et couplées magnétiquement à un bobinage BOB. Les pièces polaires $PP_1$ et $PP_2$ sont couplées magnétostatiquement entre elles à une première extrémité EXT et forment l'entrefer G à une autre extrémité. La pièce polaire $PP_1$ est déposée sur un substrat SUBS ainsi qu'on peut le voir à la figure 1d.

Aux figures 1c, 1d, le transducteur TMA est représenté disposé en regard d'un support d'enregistrement SM dont on n'a représenté qu'une partie pour simplifier. Ce support comporte une pluralité de pistes d'enregistrement dont on ne montre que la piste p, laquelle comprend une pluralité de domaines magnétiques élémentaires dont seuls trois sont représentés à savoir les domaines $A_1$, $A_2$, $A_3$ sur cette même figure 1c et cinq, à savoir, $A_1$ à $A_5$ à la figure 1d. Le support SM est par exemple un disque magnétique appartenant à une mémoire à disques. On sait que les mémoires à disques sont de plus en plus utilisées dans les systèmes de traitement de l'information en raison de leur capacité de stockage et du temps relativement court mis par les transducteurs d'écriture et/ou lecture à accéder à une information contenue en un point quelconque du disque à partir du moment où il reçoit dudit système de traitement, l'ordre d'accéder à cette information. Le support SM défilant dans le sens de la flèche F, la pièce polaire $PP_1$ est la pièce polaire aval.

Les pièces polaires $PP_1$ et $PP_2$ sont généralement constitués d'un ensemble de plusieurs couches minces magnétiques et de couches minces isolantes empliées chaque couche magnétique étant séparée de la couche voisine par une couche isolante. L'ensemble ainsi défini, qu'il comprenne une ou plusieurs couches minces magnétiques est désigné habituellement sous le nom général de "couche mince magnétique".

Le bobinage BOB est formé d'une succession de couches minces conductrices et isolantes empliées dans une direction perpendiculaire au plan des pièces polaires magnétiques en couches minces $PP_1$ et $PP_2$, une partie des couches conductrices et isolantes affleurant dans l'entrefer G. Les couches isolantes sont disposées entre les couches conductrices. Pour simplifier la figure 1d on n'a représenté que dix couches conductrices à savoir $CO_1$ à $CO_{10}$, dans l'exemple de réalisation représenté sur cette même figure. Ces couches conductrices qui ont la même forme et sont de dimensions différentes sont reliées entre elles par des éléments conducteurs de raccordement, non représentés, pour simplifier les figures 1a à 1d.

Dans la pratique courante, le bobinage BOB comporte deux enroulements $E_1$ et $E_2$ ayant un point commun D, leurs extrémités respectives étant C et A. De façon connue, dans une mémoire à disques comportant plusieurs transducteurs associés à plusieurs disques, on sélectionne tout transducteur dont on veut qu'il effectue des opérations de lecture, en envoyant une impulsion électrique de sélection sur son point milieu D.

Le bobinage BOB comporte trois conducteurs de sortie à savoir les conducteurs $C_1$, $C_2$, $C_3$, (voir figure 1c) qui sont raccordés aux circuits électroniques de lecture et/ou d'écriture de la mémoire à disques contenant le disque SM.

Lors des opérations d'écriture des informations des pistes d'une face du disque SM, on alimente pendant le même intervalle de temps T, alternativement, chacune des enroulements $E_1$ et $E_2$ par une impulsion de courant rectangulaire. L'enroulement $E_1$ est par exemple alimenté par une impulsion négative, alors que l'enroulement $E_2$ l'est par une impulsion positive, de même module que l'impulsion négative.

La répartition de l'induction magnétique le long d'une piste d'enregistrement du disque SM est alors celle indiquée par la figure 2 où l'on a représenté la variation de l'induction dans les six domaines élémentaires voisins $A_1$ à $A_6$. Les domaines $A_1$, $A_3$, $A_5$ sont enregistrés lorsque l'enroulement $E_2$ est alimenté par une impulsion de courant positive alors que les domaines $A_2$, $A_4$, $A_6$ le sont lorsque l'enroulement $E_1$, est parcouru par l'impulsion de courant négative.

Le couplage magnétique de l'enroulement $E_1$ avec la pièce polaire aval $PP_1$ étant plus importante que celui de l'enroulement $E_2$ avec cette même pièce, il en résulte notamment que le module $B_2$ de l'induction magnétique dans les domaines $A_1$, $A_3$, $A_5$ est inférieur au module $B_1$ de l'induction dans les domaines $A_2$, $A_4$, $A_6$: le long d'une piste d'enregistrement, l'induction magnétique appelée encore "induction d'écriture ou champ d'écriture" est asymétrique.

Le signal de lecture délivré par le transducteur TMA montré à la figure 3 est asymétrique en fonction du temps: ainsi la durée $t_a=(t_2-t_1)=(t'_2-t'_1)$ du front ascendant $FA_1$, $FA_3$ des impulsions positives $IMP_1$ et $IMP_3$ du signal de lecture est inférieure à la durée $t_d=(t_3-t_2)$ des fronts descendants $FD_1$ et $FD_3$ de ces mêmes impulsions. Une constatation analogue peut être faite pour les impulsions négatives $IMP_2$ et $IMP_4$. Dans la pratique courante, il est relativement fréquent que, pour des raisons technologiques de fabrication, au moins deux couches conductrices de l'enroulement $E_2$ soient en court-circuit, ce qui revient à diminuer d'au moins une unité le nombre de tours de cet enroulement (on montre que la probabilité d'existence de court-circuit pour l'enroulement $E_2$ est beaucoup plus grande que pour l'enroulement $E_1$), ce qui accroît encore l'asymétrie de l'induction d'écriture ou champ d'écriture et du signal de lecture.

Pour remédier à cet inconvénient, ainsi qu'à ceux mentionnés plus haut, le transducteur TMI, selon l'invention, représenté à la figure 4a, est tel que le nombre de tours de l'enroulement $E_1$ est inférieur au nombre de tours de l'enroulement $E_2$: on compense ainsi le fait que le couplage magnétique de $E_1$ avec la pièce polaire aval $PP_1$ est supérieur au couplage de $E_2$ avec celle-ci. Pour simplifier la description, les mêmes références désignent les mêmes éléments aux figures 4a, 4b, 5, 6a, 6b, d'une part, et aux figures 1a et 1d, d'autre part.

Plus généralement:

—si $I_1$ est le module du courant que l'on fait circuler dans l'enroulement $E_1$ lors des opérations d'écriture des informations sur le disque SM et si $I_2$ est le module du courant que l'on fait circuler dans l'enroulement $E_2$ lors de ces mêmes opérations,

—si l'on désigne respectivement, par $M_{i1}$ et $M_{j2}$ les coefficients d'induction mutuels d'une couche conductrice mince, c'est-à-dire d'un tour, quelconque $CO_i$ de l'enroulement $E_1$ et d'une couche conductrice (dun tour $CO_j$) de l'enroulement $E_2$ avec la pièce polaire aval $PP_1$,

—$N_1$ et $N_2$ désignant respectivement le nombre de couches conductrices minces, c'est -à dire le nombre de tours des enroulements $E_1$ et $E_2$ on a:

$$\sum_{i=1}^{N_1} I_1 \times M_{i1} = \sum_{j=1}^{N_2} I_2 M_{j2} = \phi_{PP1} \qquad (1)$$

Les quantités $(I_1 \times M_{i1})$ et $(I_2 \times M_{j2})$ représentent respectivement les flux magnétiques créés par le passage des courants $I_1$ et $I_2$ dans chacune des couches conductrices $CO_i$ et $CO_j$, à travers la pièce polaire aval $PP_1$. On dit encore, pour abréger, que ces quantités représentent les flux magnétiques de chacune des couches conductrices $CO_i$ et $CO_j$ à travers la pièce polaire aval.

Pour l'un quelconque des enroulements $E_1$ et $E_2$, $\phi PP_1$ est donc la somme des flux magnétiques de chacune des couches conductrices qui le composent et représente le flux magnétique crée par le passage du courant dans cet enroulement, à travers la pièce polaire avaL: on dit encore, en abrégé, qu'il s'agit du flux magnétique crée par cet enroulement, à travers la pièce polaire aval.

La figure 4b montre une vue de trois-quarts en perspective d'un premier mode de réalisation $TMI_1$, d'un transducteur selon l'invention, où l'enroulement $E_1$ comporte quatre tours et l'enroulement $E_2$ comporte sept tours.

Aux figures 4a et 4b, on a indiqué le sens de défilement du disque SM par la flèche F.

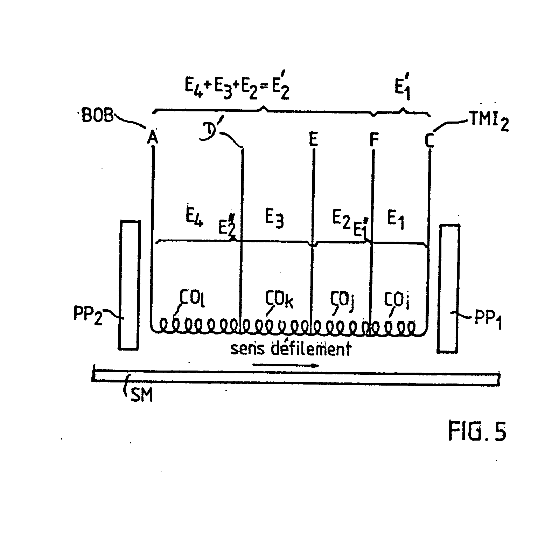

La figure 5 est un schéma de principe d'un second mode de réalisation $TMI_2$ selon l'invention comportant quatre enroulements $E_1$, $E_2$, $E_3$, $E_4$ l'enroulement $E_1$ étant l'enroulement le plus proche de la pièce polaire aval alors que l'enroulement $E_4$ est le plus éloigné. Leur nombre de tours respectifs sont $N_1$, $N_2$, $N_3$, $N_4$ avec $N_1 < N_2 < N_3 < N_4$. L'enroulement $E_1$ et l'enroulement $E_2$ ont un point électrique commun F, l'enroulement $E_2$ et l'enroulement $E_3$ ont un point électrique commun E, l'enroulement $E_3$ et l'enroulement $E_4$ ont un point électrique commun D'. On désigne respectivement par $M_{i1}$, $M_{j2}$, $M_{k3}$, $M_{l4}$, les coefficients d'induction mutuelle de chacune des couches conductrices minces $CO_i$, $CO_j$, $CO_k$, $CO_l$ de chacun des enroulements $E_1$ à $E_4$ avec la pièce polaire aval $PP_1$, En alimentant en série une partie des enroulements du transducteur $TMI_2$ par le même courant $I_1$, et en alimentant en série l'autre partie des enroulements par un même courant $I_2$, tout se passe comme si le transducteur $TMI_2$ avait seulement deux enroulements $E'_1$ et $E'_2$ (ou $E''_1$ et $E''_2$). Ainsi, $E'_1$ peut être constitué par l'enroulement $E_1$ parcouru par un même courant $I_1$), $E'_2$ est alors constitué par l'association en série des enroulements $E_2$, $E_3$, $E_4$ (parcourus par le même courant $I_2$): dans ce cas, le générateur de courant est branché entre le point électrique F et l'extrémité A du bobinage BOB, les points électriques D' et E n'étant pas connectés au générateur. On écrit alors:

$$\sum_{i=1}^{N_1} I_1 M_{i1} = \sum_{j=1}^{N_2} I_2 M_{j2} + \sum_{k=1}^{N_3} I_2 M_{k3} + \sum_{l=1}^{N_4} I_2 M_{l4} = \phi' PP_1 \qquad (2)$$

$E''_1$ peut être constitué en associant en série les enroulements $E_1$ et $E_2$ parcourus par $I_1$), $E''_2$ étant alors constitué par l'association en série des enroulements $E_3$ et $E_4$ (parcourus par $I_2$): dans ce cas, les points électriques D' et F ne sont pas connectés au générateur de courant.

On a alors:

$$\sum_{i=1}^{N_1} I_1 M_{j1} + \sum_{j=1}^{N_2} I_1 M_{j2} = \sum_{k=1}^{N_3} I_2 M_{k3} + \sum_{l=1}^{N_4} I_2 M_{l4} = \phi'' PP_1 \qquad (3)$$

La quantité $\phi' PP_1$ représente le flux magnétique des enroulements $E'_1$ et $E'_2$, à travers la pièces polaire $PP_1$, alors que la quantité $\phi'' PP_1$ représente le flux magnétique des enroulements $E''_1$ et $E''_2$ à travers cette même pièce polaire aval $PP_1$.

En considérant les formules (1), (2) et (3), on voit que, pour obtenir des champs d'écriture symétriques, ($B_3 = B_4$, voir également figure 7) on peut agir, sur le nombre de tours des enroulements, les courants dans chacun de ceux-ci ayant un module identique.

Les modes de réalisation du transducteur selon l'invention représentés aux figures 4a, 4b et 5 correspondent à cette solution.

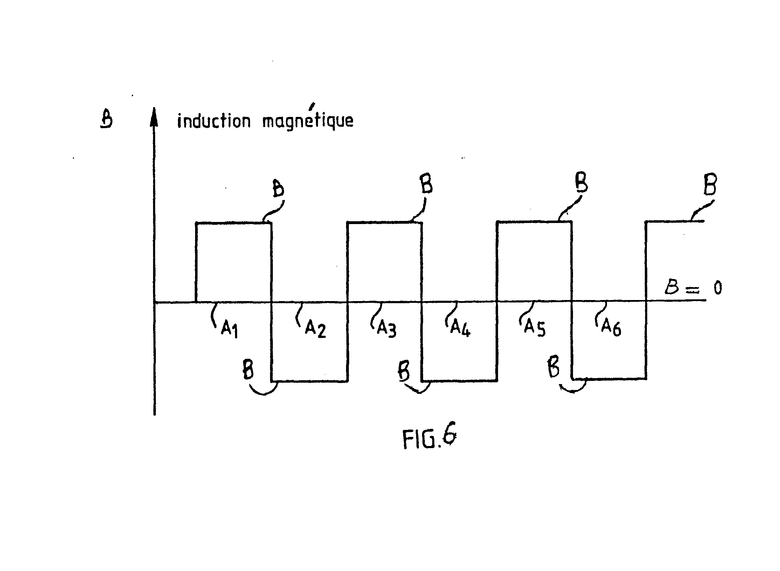

La figure 6 Montre la courbe de variation de l'induction magnétique dans six domaines magnétiques élémentaires $A_1$ à $A_6$ successifs d'une piste p du disque magnétique SM. Ces domaines sont enregistrés par l'un quelconque des transducteurs $TMI_1$, $TMI_2$ et $TMI_3$ selon l'invention. Le module

O 028 177

identique $B_3$ des inductions positives dans les domaines $A_1$, $A_3$ et $A_5$ est égal au module identique $B_4$ des inductions négatives dans les domaines $A_2$, $A_4$ et $A_6$.

## Revendications

1. Transducteur magnétique intégré de lecture et/ou d'écriture d'informations contenues sur un support magnétique défilant devant celui-ci comprenant:

—un circuit magnétique formé de deux couches minces magnétiques constituant les pièces polaires ($PP_1$, $PP_2$) superposées et couplées magnétiquement à une extrémité et disposées à l'autre extrémité voisine du support, sensiblement perpendiculairement à celui-ci pour former un entrefer,

—un bobinage formé entre les couches minces magnétiques, de couches minces conductrices ($CO_i$, $CO_j$) qui sont superposées dans une direction perpendiculaire au plan desdites couches magnétiques et séparées les unes des autres par des couches minces électriquement isolantes au moins deux couches minces conductrices pouvant être en court-circuit ou la couche mince isolante les séparant pouvant présenter des défauts d'isolation, caractérisé en ce que le bobinage comporte au moins deux enroulements ($E_1$,$E_2$ ou $E'_1$,$E'_2$) ayant un point électrique commun (D, F) et un nombre respectif de tours $N_1$,$N_2$ ou $N_1$,$N_2+N_3+N_4$ parcourus respectivement par des courants $I_1$ et $I_2$, les coefficients de couplage magnétique mutuel de chacune des couches conductrices ($CO_i$, $CO_j$) de chacun des deux enroulements avec la pièce polaire aval ($PP_1$) étant respectivement désignés par $M_{i1}$, $M_{j2}$, $N_1$ étant différent de $N_2$ ou $N_2+N_3+N_4$, flux magnétiques

$$\sum_{i=1}^{N_1} M_{i1}\, I_1 \text{ ét } \sum_{j=1}^{N_2} M_{j2}\, I_2$$

créés par chacun des deux enroulements à travers la pièce polaire aval ($PP_1$) étant égaux.

2. Transducteur selon la revendication 1, caractérisé en ce que le nombre de tours de chaque enroulement ($E_1$,$E_2$) du bobinage est d'autant plus élevé que la distance entre celui-ci et la pièce polaire aval ($PP_1$) est grande.

## Patentansprüche

1. Integrierter magnetischer Wandler zum Auslesen und/oder Aufzeichnen von Informationen, die auf einem vor diesem vorbeilaufenden magnetischen Träger enthalten sind, mit:

—einem Magnetkreis, der aus zwei magnetischen Dünnschichten gebildet ist, welche die Polstücke ($PP_1$, $PP_2$) bilden, die übereinandergelegt und an einem Ende magnetisch gekoppelt sowie am anderen Ende in der Nähe des Trägers im wesentlichen senkrecht zu diesem zur Bildung eines Eisenspaltes angeordnet sind,
—einer Wicklung, die zwischen den magnetischen Dünnschichten aus leitfähigen Dünnschichten ($CO_i$, $CO_j$) gebildet ist, welche in einer Richtung senkrecht zur Ebene der magnetischen Schichten übereinandergelegt und voneinander durch dünne, elektisch isolierende Schichten getrennt sind, wobei wenigstens zwei leitfähige Dünnschichten kurzgeschlossen sein können oder die diese trennende dünne Isolierschicht Isolierfehler aufweisen kann, dadurch gekennzeichnet, daß die Wicklung wenigstens zwei Wicklungsteile ($E_1$, $E_2$ oder $E'_1$, $E'_2$) enthält, die einen gemeinsamen elektrischen Punkt (D, F) sowie jeweils eine Anzahl von Windungen $N_1$ bzw. $N_2$ oder $N_1$ bzw. $N_2+N_3+N_4$ aufweisen und jeweils von dem Strom $I_1$ bzw. $I_2$ durchflossen werden, wobei die Koeffizienten der gegenseitigen magnetischen Kopplung jeder der leitfähigen Schichten ($CO_i$, $CO_j$) jedes der beiden Wicklungsteile mit dem in Bewegungsrichtung hinteren Polstück ($PP_1$) mit $M_{i1}$ bzw. $M_{j2}$ bezeichnet sind, wobei $N_1$ verschieden von $N_2$ oder $N_2+N_3+N_4$ ist und wobei die Magnetiflüsse

$$\sum_{i=1}^{N_1} M_{i1}\, I_1 \text{ und } \sum_{j=1}^{N_2} M_{j2}\, I_2,$$

die von jedem der beiden Wicklungsteile in dem hinteren Polstück ($PP_1$) erzeugt werden, gleich sind.

2. Wandler nach Anspruch 1, dadurch gekennzeichnet, daß die Anzahl von Windungen jedes Wicklungsteils ($E_1$, $E_2$) der Wicklung um so größer ist, desto größer der Abstand zwischen dieser und dem hinteren Polstück ($PP_1$) ist.

8

## Claims

1. Integrated magnetic transducer for reading and/or writing data contained on a magnetic carrier travelling past the transducer comprising:

—a magnetic circuit formed from two thin magnetic layers constituting the pole pieces ($PP_1$, $PP_2$) superposed and coupled magnetically at one end and disposed at the other end close to the carrier, substantially perpendicular to the latter in order to form an air gap,

—a coil formed between the thin magnetic layers, of thin conducting layers ($CO_i$, $CO_j$) which are superposed in a direction perpendicular to the plane of the same magnetic layers and separated the one from the other by thin electrical insulating layers, at least two thin conducting layers may be in short-circuit or the thin insulating layer separating them may present defects of insulation, characterised in that the coil comprises at least two windings ($E_1$, $E_2$ or $E'_1$, $E'_2$) having a common electrical point (D, F) and a respective number of turns $N_1$, $N_2$ or $N_1$, $N_2+N_3+N_4$, traversed respectively by the currents $I_1$ and $I_2$, the coefficients of mutual magnetic coupling of each of the conducting layers ($CO_i$, $CO_j$) of each of the two windings with the downstream pole piece ($PP_1$) being respectively designated by $M_{i1}$, $M_{j2}$, $N_1$ being different from $N_2$ or $N_2+N_3+N_4$, the magnetic flux

$$\sum_{i=1}^{N_1} M_{i1} I_1 \text{ and } \sum_{j=1}^{N_2} M_{j2} I_2$$

created by each of the two windings through the downstream pole piece ($PP_1$) being equal.

2. Transducer according to claim 1, characterised in that the number of turns of each winding ($E_1$, $E_2$) of the coil is all the more greater as the distance between the latter and the downstream pole piece ($PP_1$) is large.

0 028 177

FIG.1b

FIG.1a

FIG.1c

FIG.1d

FIG.1

B induction magnétique

M = 0

$A_1$ $A_2$ $A_3$ $A_4$ $A_5$ $A_6$

FIG.2

tension
signal
de
lecture

$IMP_1$

$FA_1$ $FD_1$

$IMP_3$

$FA_3$ $FD_3$

$t_1$ $t'_a$ $t_2$ $t''_d$ $t_3$

$t'_1$ $t''_a$ $t'_2$ $t''_d$ $t'_3$

$IMP_2$

$IMP_4$

FIG.3

FIG.4a

A D C TMI

$E_2$ $E_1$

$PP_2$ $PP_1$

$I_2$ $I_1$

$CO_j$ $CO_i$

F

SM

FIG.4b

C

$CO_i$

D A $TMI_1$

$CO_j$

F

$PP_1$

$PP_2$

$A_2$

$A_1$

FIG.4

FIG. 5

FIG.6